# EUROPEAN PATENT SPECIFICATION

(11) **EP 4 094 956 B1**
(45) Date of publication and mention of the grant of the patent: **26.06.2024**
(21) Application number: 22174604.3
(22) Date of filing: 20.05.2022
(51) Int. Cl.: B60C 7/14, B60C 7/24, B29D 30/02, B33Y 80/00

(54) **NON-PNEUMATIC TIRE AND RIM ASSEMBLY**
BAUGRUPPE AUS LUFTLOSEM REIFEN UND FELGE
PNEU NON PNEUMATIQUE ET ENSEMBLE JANTE

(30) Priority: 27.05.2021 US 202163193909 P; 25.03.2022 US 202217656437
(43) Date of publication of application: 30.11.2022
(73) Proprietor: The Goodyear Tire & Rubber Company, Akron, OH 44316 (US)
(72) Inventor: SIGLER, Wesley Glen, Baberton, 44203 (US); RACHITA, Michael Joseph, North Canton, 44720 (US)
(74) Representative: Kutsch, Bernd

(56) References cited:
- CN-A- 103 350 615
- CN-U- 207 594 648
- JP-A- 2009 269 413
- JP-A- 2021 000 752
- US-A1- 2016 243 890
- US-A1- 2018 029 419
- US-A1- 2018 354 304
- US-A1- 2019 143 619
- US-A1- 2021 061 009

## Description

### Field of the Invention

The invention relates in general to a vehicle wheel, and more particularly to a non-pneumatic tire and rim assembly and to its method of manufacturing.

### Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non-pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus, an improved non-pneumatic tire is desired that has all the features of the pneumatic tires without the drawback of the need for air inflation is desired. It is also desired to have an improved non-pneumatic tire that has longer tread life as compared to a pneumatic tire of the same size.

US 2021/061009 A1 describes a non-pneumatic tire and rim assembly in accordance with the preamble of claim 1.

Other non-pneumatic tire and rim assemblies are describes in JP 2009 269413 A1, US 2019/143619 A1, US 2016/243890 A1, CN 103 350 615 A, CN 207 594 648 U.

### Summary of the Invention

The invention relates to a non-pneumatic tire and wheel assembly in accordance with claim 1 and to a method in accordance with claim 7.

Dependent claims refer to preferred embodiments of the invention.

The invention provides a non-pneumatic tire and wheel assembly comprising: a rim, a spoke ring structure having an inner ring that is mounted on an outer surface of the rim, wherein the inner ring has one or more retention nubs aligned for reception in complementary shaped grooves on the outer surface of the rim, wherein the spoke ring structure has a plurality of spoke members, and an outer tread ring mounted on the outer circumference of the spoke ring.

### Definitions

"Aspect Ratio" means the ratio of a tire's section height to its section width.

"Axial" and "axially" means the lines or directions that are parallel to the axis of rotation of the tire.

"Circumferential" means lines or directions extending along the perimeter of the surface of the annular tread perpendicular to the axial direction.

"Radial" and "radially" mean directions radially toward or away from the axis of rotation of the tire.

### Brief Description of the Drawings

The invention will be described by way of example and with reference to the accompanying drawings in which:
FIG. 1 is a front view of a non-pneumatic tire and rim assembly of the present invention;
FIG. 2 is a rear view of the non-pneumatic tire and rim assembly of FIG. 1;
FIG. 3 is an exploded view of the non-pneumatic tire and rim assembly of FIG. 1;
FIG. 4 is an exemplary vehicle with multiple non-pneumatic tire and rim assemblies of the present invention;

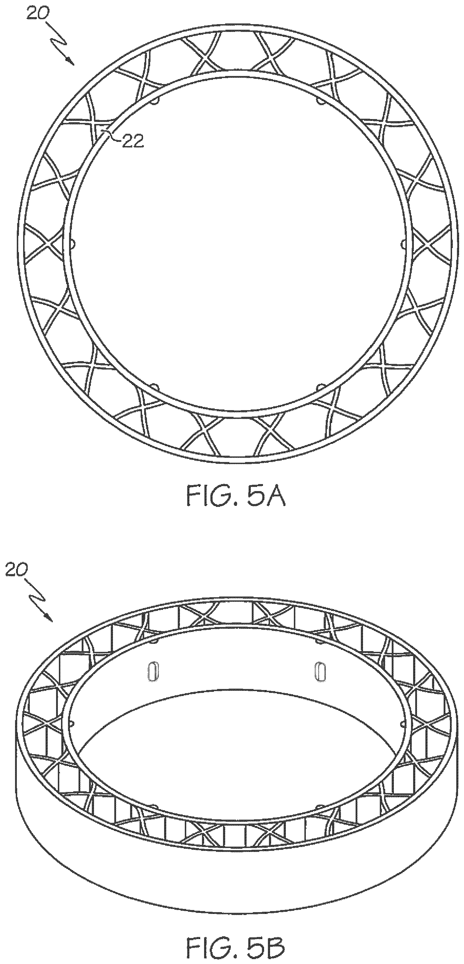

FIG. 5A is a front view of a spoke ring assembly, while FIG. 5B is a perspective view of the spoke ring assembly of FIG. 5A;

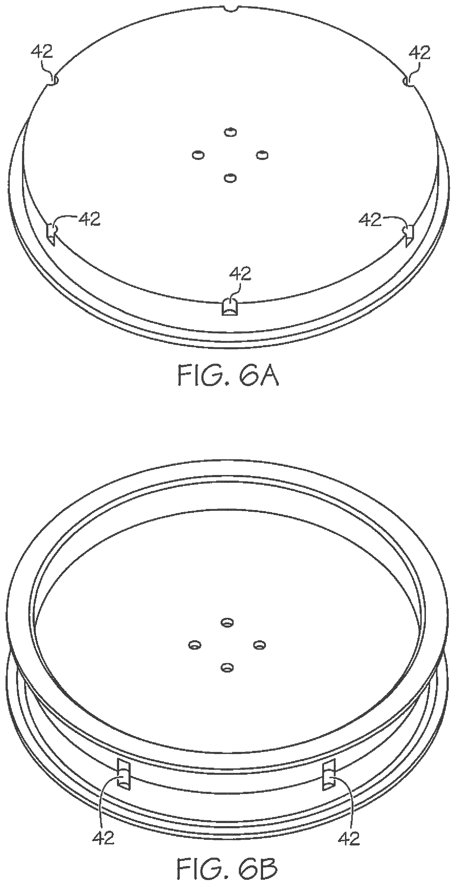

FIG. 6A is a perspective view of the left rim half, while FIG. 6B is a perspective view of the right rim half;
FIG. 7 is a close-up view cut away section of the non-pneumatic tire and rim assembly;

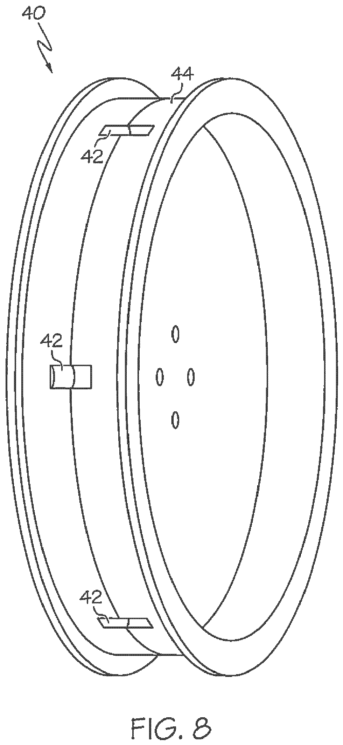

FIG. 8 is a perspective view of the split rim;

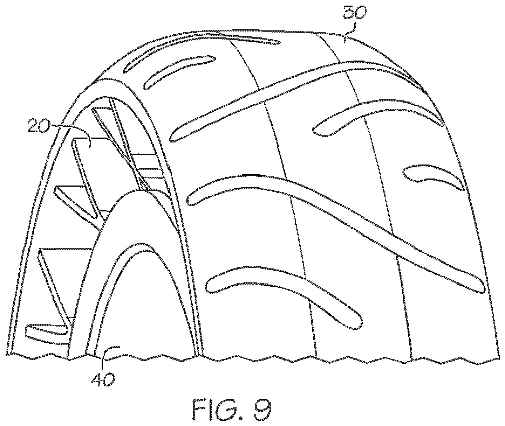

FIG. 9 is a close-up perspective view of the non-pneumatic tire and rim assembly; and
FIG. 10 is a close-up view of the retention nubs located on the inner ring of the spoke ring structure and the retention groove of the rim.

### Detailed Description of Preferred Embodiments of the Invention

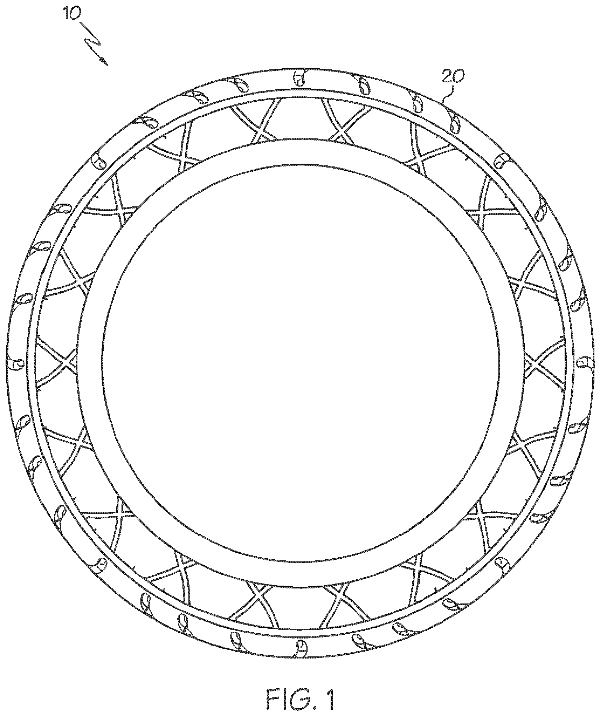

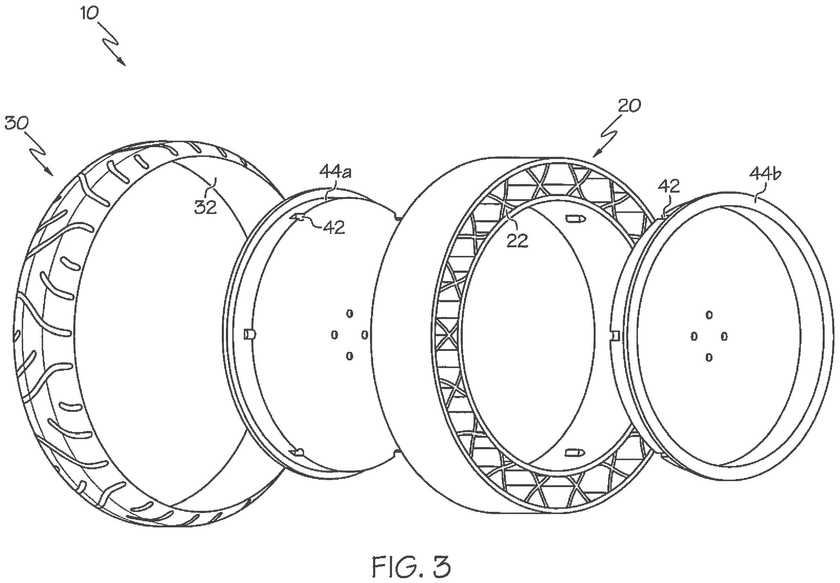

Referring to FIGS. 1, 2 and 3, a non-pneumatic tire and rim assembly 10 of the present invention is shown. The non-pneumatic tire and rim assembly 10 includes an outer annular tread ring 30, a spoke ring structure 20, and a rim 40. The outer annular tread ring 30 is preferably a one piece annular structure that is formed of a polymer, rubber or other desired elastomer. The tread ring 30 may be molded and cured as a one piece ring, and is mounted on the outer periphery of the spoke ring. The outer surface of the tread ring 30 may include tread elements such as ribs, blocks, lugs, grooves, and sipes as desired in order to improve the performance of the tire in various conditions.

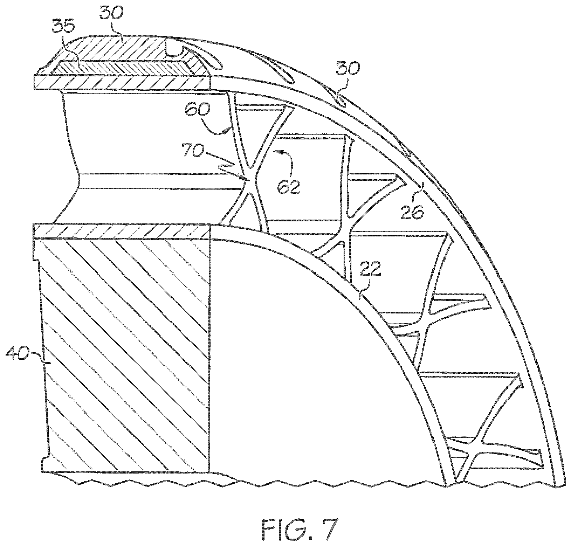

The tread ring 30 may include an optional shear ring 35, as shown in FIG. 7. The optional shear ring 35 is preferably a discrete ring, formed of a different material than the tread ring 30. Alternatively, the optional shear ring 35 may be integrally formed with the spoke ring 20, and located on the outer annular surface of the spoke ring. The optional shear ring 35 is preferably located between the outer circumference of the spoke ring, and the inner circumference of the tread ring. The optional shear ring 35 may optionally include one or more annular reinforcement layers, which could be fabric with optional parallel reinforcement cables preferably oriented in the zero degree (circumferential) orientation. The tread ring 30, optional shear ring 35 and spoke structure may be integrally formed via injection molding or three dimensional printing, or they may be formed in discrete components by injection molding or three dimensional printing and then assembled together.

### Spoke Ring Structure

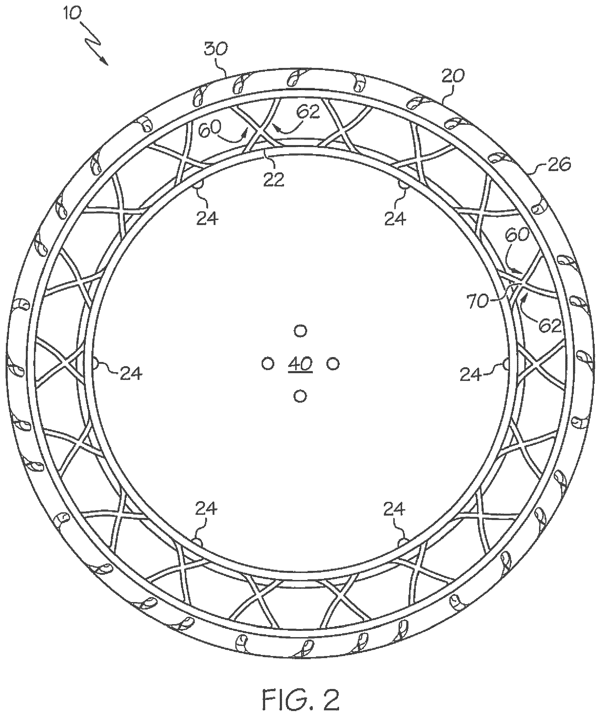

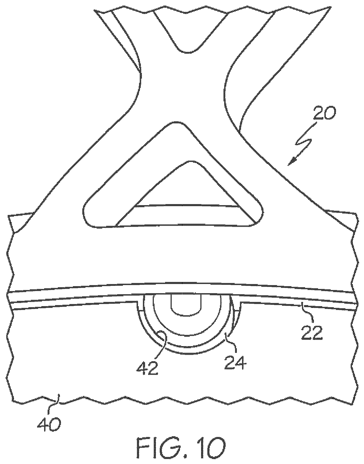

The non-pneumatic tire and rim assembly 10 further includes a spoke ring structure 20. The spoke ring structure 20 has an inner ring 22 that is mounted on the rim. The inner ring 22 has a plurality of retaining nubs or projections 24, as shown in FIG. 2 and FIG. 10. The nubs 24 are hemispherical or round in cross-sectional shape. The retaining nubs 24 are received in complementary shaped grooves 42 located on the outer surface 44 of the rim 40.

The spoke ring structure further includes an outer ring 26 having an outer surface that is joined to the inner tread surface 32 by an adhesive polymer. The spoke ring structure further includes a plurality of spoke members that extend between the inner ring 22 to the outer ring 26. In a first example shown in FIGS. 2 and 7, the spoke ring structure has a first spoke member 60 that extends from the inner ring 22 to the outer ring 26 at an angle. The spoke ring structure includes a second spoke member 62 that also extends from the inner ring to the outer ring 26 at an angle. The first and second spoke member 60, 62 are joined together at a junction 70 to form an X shaped spoke. The first and second spoke members 60, 62 may be straight or curved.

The spoke ring structure 20 is preferably an integrally formed annular structure made of a resilient elastomeric material or moldable polymeric material such as natural rubber, styrene butadiene rubber, polybutadiene rubber or EPDM rubber or a blend of two or more of these rubbers which can be utilized in either injection molding or compression molding. The spoke ring structure 20 has an axial thickness equal to the axial thickness of the non-pneumatic tire. The spoke ring structure 20 has a plurality of spokes that connect an inner ring 22 and an outer ring 24.

The spoke disks are preferably formed of an elastic material, more preferably, a thermoplastic elastomer. The material of the spoke disks is selected based upon one or more of the following material properties. The tensile (Young's) modulus of the spoke disk material is preferably in the range of 15 MPa to 100 MPa, and more preferably in the range of 30 MPa to 70 MPa.

### Rim

The rim 40 is a split rim or two piece rim 44a, 44b that are joined together by fasteners to form a tire engaging surface surrounded by tire-engaging flanges. The rim 40 is preferably of a substantially rigid material such as steel and has a tire-supporting outer circumferential surface.

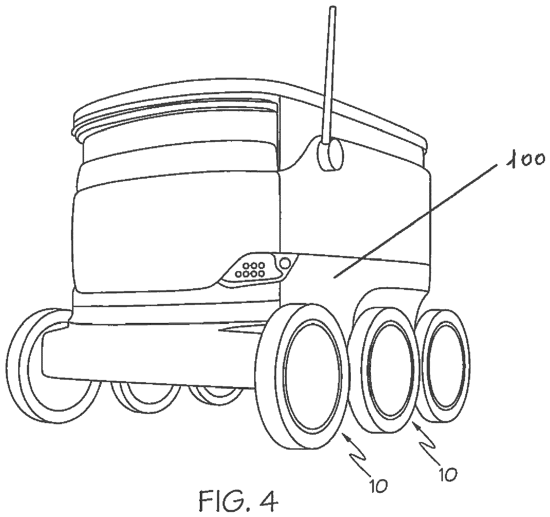

In one example, the tire of the present invention is provided on a mobile delivery vehicle 100 as shown in FIG. 4. The mobile delivery vehicle 100 has at least three, preferably four or more non-pneumatic tire and rim assemblies of the present invention, and more particularly, six non-pneumatic tire and rim assemblies. The tire has an outer rubber tread and a spoke ring structure that is injection molded and formed of a TPU or polyurethane material having a tensile modulus of 10-100 MPA. The spoke ring structure may also be three dimensionally printed. The non-pneumatic tire and rim of the present invention has a spring rate in the range of 43780 N/m to 52520 N/m (250 to 300 pounds per inch). The non-pneumatic tire and rim of the present invention has an axial width of 38.1 mm (or from 30 to 50 mm) with 15 x to 24 x shaped spokes having a radial height of 25.4 mm (or from 15 to 40 mm). While the non-pneumatic tire and wheel assembly is described as having X shaped spokes, other spoke designs could be used. The rim has an outer diameter of 127 mm (or 76.2 mm to 203.2 mm) but could be sized to be smaller in the outer diameter to provide a greater radial height of the spoke ring structure.

## Claims

1. A non-pneumatic tire and wheel assembly comprising a rim (40), a spoke ring structure (20) having an inner ring (22) that is mounted on an outer surface of the rim (40), wherein the inner ring (22) has one or more retention nubs (24) aligned for reception in complementary shaped grooves (42) on the outer surface of the rim (40), wherein the spoke ring structure (20) has a plurality of spoke members (60, 62) and an outer tread ring (30) mounted on the outer circumference of the spoke ring structure (20), wherein the spoke members (60, 62) are joined together at a junction (70) to form an X shaped spoke and wherein the rim (40) is a two piece rim (44a, 44b), **characterized in that** the retention nubs (24) are round or hemispherical in cross-section.

2. The non-pneumatic tire and wheel assembly of at least one of the previous claims further including a shear ring (35).

3. The non-pneumatic tire and wheel assembly of claim 2 wherein the shear ring (35) is located between the outer tread ring (30) and the spoke ring structure (20).

4. The non-pneumatic tire and wheel assembly of claim 2 or 3 wherein the shear ring (35) is integrally formed with the spoke ring structure (20).

5. The non-pneumatic tire and wheel assembly of at least one of the previous claims wherein the spoke ring structure (20) is formed of a polymer material having a tensile modulus in the range of from 15 to 100 MPa.

6. The non-pneumatic tire and wheel assembly of at least one of the previous claims 2 to 5 wherein the shear ring (35) is mounted radially outward of the spoke ring structure (20), the shear ring (35) being integrally formed with the spoke ring structure (20).

7. A method of manufacturing the non-pneumatic tire and wheel assembly of at least one of the previous claims wherein the non-pneumatic tire and wheel assembly (10) is formed by three-dimensional printing.

## Patentansprüche

1. Nicht-pneumatische Reifen- und Radbaugruppe, die eine Felge (40), eine Speichenringstruktur (20), die einen inneren Ring (22) aufweist, der an einer äußeren Fläche der Felge (40) angebracht ist, umfasst, wobei der innere Ring (22) einen oder mehrere Haltenoppen (24) aufweist, die zur Aufnahme in komplementär geformten Nuten (42) an der äußeren Fläche der Felge (40) ausgerichtet sind, wobei die Speichenringstruktur (20) eine Vielzahl von Speichenelementen (60, 62) und einen äußeren Laufflächenring (30) aufweist, der am äußeren Umfang der Speichenringstruktur (20) angebracht ist, wobei die Speichenelemente (60, 62) an einer Verbindung (70) miteinander verbunden sind, um eine X-förmige Speiche zu bilden, und wobei die Felge (40) eine zweiteilige Felge (44a, 44b) ist, **dadurch gekennzeichnet, dass** die Haltenoppen (24) im Querschnitt rund oder halbkugelförmig sind.

2. Nicht-pneumatische Reifen- und Radbaugruppe nach mindestens einem der vorhergehenden Ansprüche, die ferner einen Scherring (35) aufweist.

3. Nicht-pneumatische Reifen- und Radbaugruppe nach Anspruch 2, wobei der Scherring (35) zwischen dem äußeren Laufflächenring (30) und der Speichenringstruktur (20) angeordnet ist.

4. Nicht-pneumatische Reifen- und Radbaugruppe nach Anspruch 2 oder 3, wobei der Scherring (35) einstückig mit der Speichenringstruktur (20) ausgebildet ist.

5. Nicht-pneumatische Reifen- und Radbaugruppe nach mindestens einem der vorhergehenden Ansprüche, wobei die Speichenringstruktur (20) aus einem Polymermaterial gebildet ist, das einem Zugmodul im Bereich von 15 bis 100 MPa aufweist.

6. Nicht-pneumatische Reifen- und Radbaugruppe nach mindestens einem der vorhergehenden Ansprüche 2 bis 5, wobei der Scherring (35) radial außerhalb der Speichenringstruktur (20) angebracht ist, wobei der Scherring (35) einstückig mit der Speichenringstruktur (20) ausgebildet ist.

7. Verfahren zur Herstellung der nicht-pneumatischen Reifen- und Radbaugruppe nach mindestens einem der vorhergehenden Ansprüche, wobei die nicht-pneumatische Reifen- und Radbaugruppe (10) durch dreidimensionales Drucken gebildet wird.

## Revendications

1. Assemblage d'une roue et d'un bandage non pneumatique, qui comprend une jante (40), une structure sous la forme d'un anneau à rayons (50) qui possède un anneau interne (22) qui est monté sur une surface interne de la jante (40), dans lequel l'anneau interne (22) possède une ou plusieurs protubérances de rétention (24) qui sont alignées à des fins de réception dans des rainures de configuration complémentaire (42) sur la surface externe de la jante (40), dans lequel la structure sous la forme d'un anneau à rayons (20) possède un certain nombre d'éléments sous la forme de rayons (60, 62) et un anneau de bande de roulement externe (30) monté sur la circonférence externe de la structure sous la forme d'un anneau à rayons (20), dans lequel les éléments sous la forme de rayons (60, 62) sont joints les uns au autres à une jonction (70) afin de former un rayon qui possède une configuration en forme de X, et dans lequel la jante (40) est une jante en deux pièces (44a, 44b), **caractérisé en ce que** les protubérances de rétention (24) possèdent une section transversale de forme ronde ou hémisphérique.

2. Assemblage d'une roue et d'un bandage non pneumatique selon au moins une des revendications précédentes, qui englobe en outre un anneau de cisaillement (35).

3. Assemblage d'une roue et d'un bandage non pneumatique selon la revendication 2, dans lequel l'anneau de cisaillement (35) est situé entre l'anneau de bande de roulement externe (30) et la structure sous la forme d'un anneau à rayons (20).

4. Assemblage d'une roue et d'un bandage non pneumatique selon la revendication 2 ou 3, dans lequel l'anneau de cisaillement (35) est réalisé en une seule pièce avec la structure sous la forme d'un anneau à rayons (20).

5. Assemblage d'une roue et d'un bandage non pneumatique selon au moins une des revendications précédentes, dans lequel la structure sous la forme d'un anneau à rayons (20) est réalisée à partir d'une matière polymère qui possède un module d'élasticité en traction qui se situe dans la plage allant de 15 à 100 MPa.

6. Assemblage d'une roue et d'un bandage non pneumatique selon au moins une des revendications précédentes 2 à 5, dans lequel l'anneau de cisaillement (35) est monté à l'extérieur, dans la direction radiale, de la structure sous la forme d'un anneau à rayons (20), l'anneau de cisaillement (35) étant réalisé en une seule pièce avec la structure sous la forme d'un anneau à rayons (20).

7. Procédé de fabrication de l'assemblage d'une roue et d'un bandage non pneumatique selon au moins une des revendications précédentes, dans lequel l'assemblage d'une roue et d'un bandage non pneumatique (10) est réalisé par l'intermédiaire d'une impression en trois dimensions.
